# EUROPÄISCHE PATENTSCHRIFT

(11) **EP 0 501 319 B1**
(45) Veröffentlichungstag und Bekanntmachung des Hinweises auf die Patenterteilung: **25.06.1997**
(21) Anmeldenummer: 92102896.5
(22) Anmeldetag: 21.02.1992
(51) Int. Cl.: C05F 17/02

(54) **Kompostieranlage zur Kompostierung von Abfällen**
Installation for composting waste materials
Installation pour la transformation de déchets en compost

(30) Priorität: 25.02.1991 AT 382/91
(43) Veröffentlichungstag der Anmeldung: 02.09.1992
(73) Patentinhaber: THÖNI INDUSTRIEBETRIEBE GESELLSCHAFT m.b.H., A-6410 Telfs (AT)
(72) Erfinder: Schmutz, Urs, CH-4466 Ormalingen (CH); Mederle, Anton, A-6414 Mieming (AT)
(74) Vertreter: Hofinger, Engelbert, DDr.

(56) Entgegenhaltungen:
- EP-A- 232 700
- DE-A- 2 723 929
- DE-A- 3 827 288

## Beschreibung

Die Erfindung betrifft eine Kompostieranlage zur Kompostierung von Abfällen nach vorgegebenen Verrottungsparametern. Hiebei handelt es sich sowohl um organische Abfälle als auch um sämtliche biogene Abfallstoffe einschließlich ölverseuchtem Erdreich und Schlämmen.

Es sind bereits eine Vielzahl von Verfahren und Vorrichtungen bekannt geworden, die eine beschleunigte Kompostierung von Abfällen auf natürlichem Wege bewirken sollen. Hiezu wird versucht, den Betrieb entsprechend bekannter Rottehauptparameter (Sauerstoffzufuhr, Feuchtegehalt, Temperatur und das Verhältnis von C:N) zu steuern. Hiezu wird beispielsweise auf die DE-A 27 23 929, die DE-A 36 31 170, die DE-A 37 32 564, die DE-A 38 27 288, die DE-A 38 44 700, die DE-A 39 24 844, die DE-C 31 04 799, die DE-C 32 04 471, oder die EP-B 64 257 verwiesen, wobei nach der DE-A 27 23 929 und der DE-A 37 32 564 Teile von zumindest teilweise kompostiertem Material wieder Zurückgeführt werden.

Hiebei ist es auch bekannt, das zu verrottende Gut innerhalb eines Behälters von unten nach oben umzuschütten bzw. nacheinander von einem Behälter in einen weiteren zu überführen, wobei dem teilverrotteten Gut im zweiten Behälter kompostierbare Zuschläge zugegeben werden (DE-A 30 24 813). Fertiger Kompost wird gemäß der EP-A 232 700 mittels eines hin- und herbewegbaren Kratzbodens aus der Kompostieranlage in eine eine Förderschnecke aufweisende Sammelrinne ausgetragen.

Die bekannten Verfahren setzen einen bestimmten Umwandlungsablauf voraus, d. h. es wird eine bestimmte Zeit für eine bestimmte Kompostierphase vorgegeben. Da jedoch eine Vielzahl von teils noch nicht exakt bestimmten bzw. bestimmbaren Komponenten für die einzelnen Kompostierphasen maßgeblich sind, entspricht die Qualität des Komposts oft nicht den errechneten Erwartungen.

Die Erfindung hat es sich daher zur Aufgabe gestellt, eine Vorrichtung zu schaffen, in der die Kompostierungsbedingungen trotz der vorgegebenen Verrottungsparameter wesentlich flexibler erstellbar und alle Verfahrensschritte einzeln ausführbar und variierbar sind.

Erfindungsgemäß wird dies dadurch erreicht, daß zumindest zwei jeweils eine Verrottungseinheit bildende Behälter, die jeweils eine untere Austrageinrichtung sowie eine obere Füllöffnung aufweisen, und eine Fördereinrichtung vorgesehen sind, die einen allen Austrageinrichtungen zugeordneten, unteren Sammler, einen am Ende des Sammlers angeordneten Steigförderer und einen oberen Verteiler aufweist, in dem pro Behälter ein der Füllöffnung zugeordnetes, verschließbares Abgabefenster vorgesehen ist, wobei jede untere Austrageinrichtung einen mittels eines hydraulischen Antriebs hin- und herbewegbaren Kratzboden aufweist, dessen Leisten für eine Luft- oder Sauerstoffzufuhr zumindest teilweise hohl und mit Luftaustrittsöffnungen versehen sind.

Die Anordnung mechanischer Teile innerhalb des Behälters wird so erübrigt und eine möglichst einfache Ausbildung der unteren Austrageinrichtung erreicht, mittels der, in Abhängigkeit von den Verrottungsparametern, das Kompostiergut aus jeder Verrottungseinheit ausgetragen und dem Kompostiergut jeder Verrottungseinheit wieder zugegeben werden kann.

Im Gegensatz zu bisherigen mehrstufigen Verfahren bei denen jede folgende Verrottungsphase erst nach dem Abschluß der vorhergehenden Verrottungsphase erfolgen sollte, ermöglicht das erfindungsgemäße Verfahren Kompostiergut einer fortgeschrittenen Verrottungsstufe, das aber den zugehörigen Verrottungszustand noch nicht erreicht hat, wieder in eine niederere Verrottungsstufe zurückzuführen. Ebenso kann dadurch aber auch Kompostiergut einer niederen Verrottungsstufe, das bereits einer nächsten Verrottungsphase unterworfen werden könnte, vorzeitig in diese Verrottungsphase überführt werden. Insbesondere wegen der meist nicht homogenen Zusammensetzung des zu kompostierenden Gutes und wegen der meist unumgänglichen Zumischung anfallenden, frischen Abfallmaterials sind beide Maßnahmen von besonderem Vorteil, da aus jeder Verrottungseinheit ausgetragenes Kompostiergut entsprechend seinem Verrottungszustand aufgeteilt werden kann. Frisches Kompostiergut kann bereits an der Austragseite der Verrottungseinheiten in den Kreislauf eingebracht werden. Dies führt, wenn aus zumindest einer Verrottungseinheit Kompostiergut ausgetragen wird, zu einer möglichst langen Vermischungszeit des frischen Materials bis zu dessen Abgabe in jene Verrottungseinheit, deren Betriebsparameter die Zumischung erlauben oder benötigen.

Um Rottekondensat aufzufangen, das gegebenenfalls zur Befeuchtung trockenen Kompostiergutes verwendet werden kann, kann unterhalb des Kratzbodens eine Rottekondensatsammelwanne vorgesehen sein.

Vorteilhaft erfolgt die Kompostierung in einem geschlossenen System, wodurch einerseits ein ganzjähriger Betrieb ermöglicht wird und andererseits negative Umwelteinflüsse, wie Lärm, Gerüche und schädigende Gasentwicklung vermieden werden. Die außerhalb der Behälter diese umgehende Fördereinrichtung weist hiezu vorzugsweise geschlossenen Förderkanäle auf, in denen wellenlose Förderschnecken angetrieben werden.

Der untere Sammler ist zur Eingabe von Kompostausgangsmaterial vorgesehen und bevorzugt unmittelbar an einen Abfallzerkleinerer angeschlossen, dessen Auslaß mit einer Aufgabeöffnung des Sammlers verbunden ist. Die Aufgabeöffnung ist in Förderrichtung gesehen insbesondere vor der Mündung der Austragseinrichtungen ausgebildet.

Die Entnahme des kompostierten Gutes aus dem Kreislauf erfolgt vorzugsweise an der Eingangsseite der Behälter, wodurch sich eine vorteilhafte örtliche Trennung von Belade- und Entladestelle ergibt. Der oberhalb der Behälter angeordnete obere Verteiler, der wie erwähnt ebenfalls durch einen geschlossenen Förderkanal gebildet ist, dient vorzugsweise auch zur Entladung kompostierten Gutes, wenn er nach dem letzten Abgabefenster einen Entladeabschnitt aufweist, der einen Endverschluß aufweist. Sind alle Abgabefenster verschlossen und der Endverschluß geöffnet, so kann mittels der Förderschnecke des oberen Verteilers das kompostierte Gut über dem Entladeabschnitt abgegeben werden, und somit ein Transportbehälter direkt befüllt werden.

Nachstehend wird nun die Erfindung an Hand der Figuren der beiliegenden Zeichnung näher beschrieben.

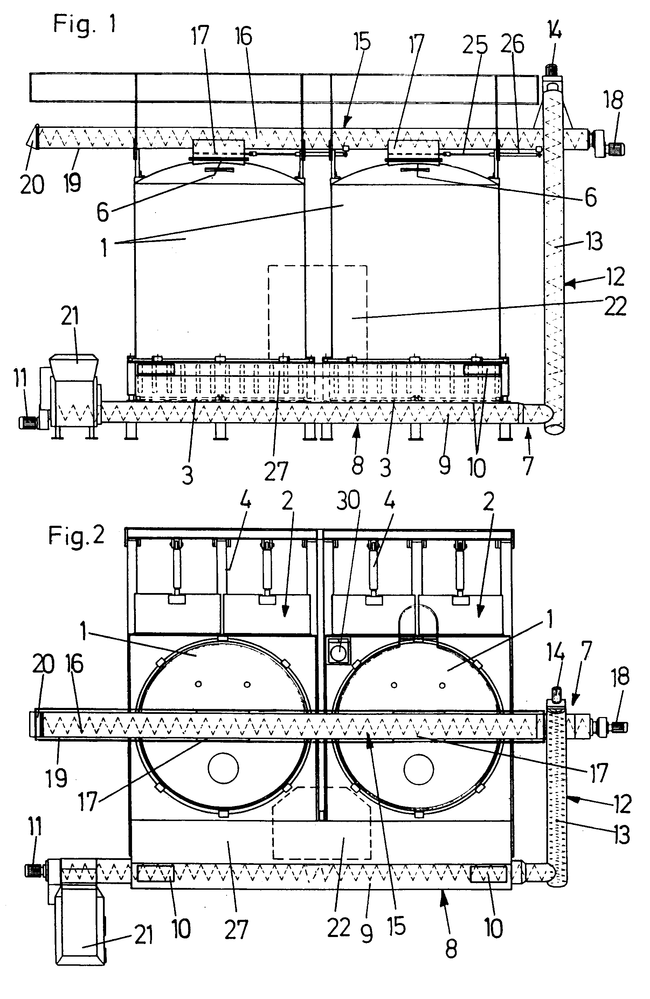

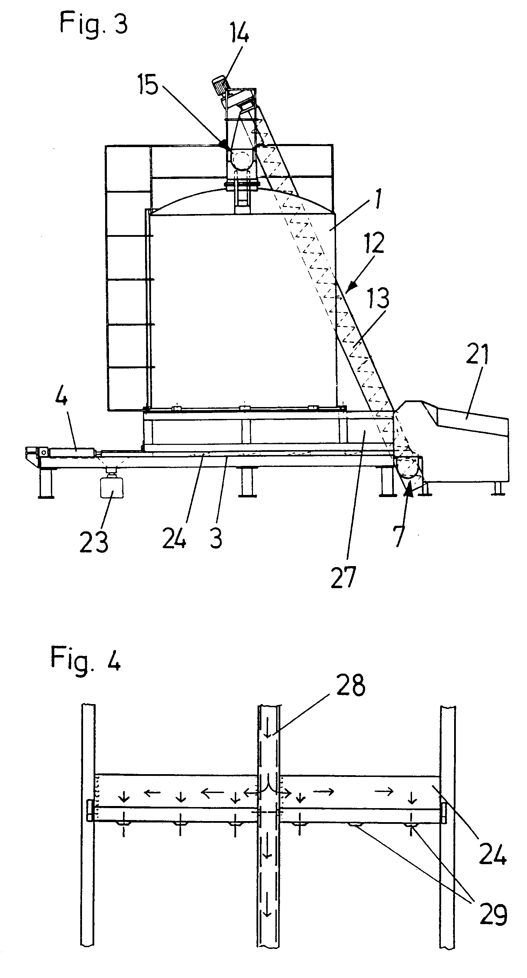

Fig. 1 zeigt eine schematische Vorderansicht, Fig. 2 eine schematische Draufsicht, Fig. 3 eine schematische Seitenansicht einer erfindungsgemäßen Kompostieranlage, und Fig. 4 eine schematische Darstellung einer Kratzbodenleiste.

Die Kompostieranlage weist zumindest zwei Behälter 1, insbesondere geschlossene Silos auf, die jeweils einen in einem Gehäuse 27 angeordneten Kratzboden 3 als Austrageinrichtung 2 und eine Füllöffnung 6 aufweisen. Jeder Kratzboden 3 ist mit einem von einer Antriebshydraulik 30 versorgten Antriebseinrichtung 4, der eine Hin- und Herbewegung des Kratzbodens 3 bewirkt, und mit dreikantigen Kratzleisten 24 versehen, deren in Austragrichtung weisende Seiten annähernd vertikal verlaufen. Fig. 4 zeigt schematisch einen Ausschnitt des Kratzbodens 3. Die Kratzleisten 24 sind hohl ausgebildet und weisen an ihren Vertikalseiten Austrittsöffnungen 29 auf. Über diese und über die Leitung 28 kann für die Einstellung der Zusammensetzung der Luft in den Behältern 1 benötigtes Gas, wie Sauerstoff, direkt in das Kompostiergut eingebracht werden. Diese ebenfalls über die Steuerung 22 ausführbare Gaszufuhr ermöglicht es, einen der wichtigen Rotteparameter möglichst optimal zu halten, sodaß ein schneller Umsetzungsvorgang gewährleistet ist. Durch das Hin- und Herbewegen der Kratzböden 3 ist einerseits die Ausbildung von Luftgassen und andererseits auch die Verstopfung der Austrittsöffnungen 29 ausgeschlossen.

An der Austragseite münden die Kratzböden 3 in einen gemeinsamen, horizontalen Sammler 8, der als geschlossener Förderkanal ausgebildet ist und eine wellenlose Förderschnecke 9 enthält. Das über die Kratzböden 3 ausgetragene Kompostiergut fällt in den Sammler 8, dessen Förderschnecke 9 es in einen ebenfalls als geschlossener Förderkanal ausgebildeten Steigförderer 12 übergibt, in dem eine weitere wellenlose Förderschnecke 13 angeordnet ist. Am oberen Ende des Steigförderers 12 schließt ein wiederum horizontaler Verteiler 15 in Form eines geschlossenen Förderkanals an, der eine dritte wellenlose Förderschnecke 16 enthält. Der Verteiler 15 überspannt die Füllöffnungen 6 aller Behälter 1 und weist pro Füllöffnung 6 ein Abgabefenster 17 auf, das durch einen Schieber verschließbar ist. Anstelle eines Schiebers kann jedes Abgabefenster auch durch ruhendes Kompostiergut verschlossen sein, wenn unterhalb des Abgabefensters 17 ein horizontaler Querkanal vorgesehen ist, der ebenfalls eine Förderschnecke enthält. Ruht deren Antrieb, so ist das Abgabefenster 17 gesperrt, wird sie hingegen angetrieben, wird durch das Abgabefenster 17 Kompostiergut ausgetragen und über den Querkanal in den Behälter 1 bzw. dessen Füllöffnung 6 abgegeben.

Im Anschluß an das letzte Abgabefenster 17 bildet der Verteiler 15 einen über die Anlage überstehenden Entladeabschnitt 19 mit einem endseitigen Verschluß 20. Die hydraulischen Antriebe 4, 30 der Kratzböden 3, die Antriebsmotoren 11, 14 und 18 der wellenlosen Förderschnecken 9, 13, 16 und die vorzugsweise hydraulischen Antriebe 26 der Verschlußschieber 25 der Abgabefenster 17 sowie des endseitigen Verschlusses 20 sind unabhängig voneinander wahlweise einsetzbar, wofür eine strichliert gezeichnete gemeinsame Steuerung 22 vorgesehen ist. Zum Auffangen von Rottekondensat kann unterhalb jedes Kratzbodens 3 eine Kondensatsammelrinne mit Sammelwanne 23 vorgesehen sein.

Wie gezeigt, kann zu Beginn des Sammlers 8 ein Zerkleinerer 21 vorgesehen sein, über dessen Auslaß zerkleinertes Material direkt in die Förderschnecke 9 gelangt. Sichtfenster bzw. zu öffnende Sichtklappen 10 sind beispielsweise an der Oberseite des Sammlers 8 und an der Austragseite der Behälter 1 an der Vorderseite der Kratzbodengehäuse 27 ausgebildet. Da jeder Behälter 1 eine eigene Verrottungseinheit umfaßt, können auch mehrere Behälter baukastenartig aneinandergereiht werden, wobei nur der Sammler 8 und der Verteiler 15 verlängert oder durch längere ersetzt werden.

Das in jedem Behälter 1 enthaltene Kompostiergut kann mittels der Austrageinrichtungen 2 ausgetragen und mittels der Fördereinrichtung 7 jedem Behälter 1 in beliebigen Mengen wieder zugegeben werden, sodaß das Kompostiergut den jeweils günstigsten Kompostierbedingungen unterworfen ist. Kompostiertes Gut wird dann über den Verschluß 20 abgegeben, wobei alle Schieber 25 im Verteiler 15 geschlossen sind.

## Patentansprüche

1. Kompostieranlage zur Kompostierung von Abfällen nach vorgegebenen Verrottungsparametern mit zumindest zwei jeweils eine Verrottungseinheit bildenden Behältern (1), die jeweils eine untere Austrageinrichtung (2) sowie eine obere Füllöffnung (6) aufweisen, und mit einer Fördereinrichtung (7), die einen allen Austrageinrichtungen (2) zugeordneten, unteren Sammler (8), einen am Ende des Sammlers (8) angeordneten Steigförderer (12) und einen oberen Verteiler (15) aufweist, in dem pro Behälter (1) ein der Füllöffnung (6) zugeordnetes, verschließbares Abgabefenster (17) vorgesehen ist, wobei jede untere Austrageinrichtung (2) einen mittels eines hydraulischen Antriebs (4) hin- und herbewegbaren Kratzboden (3) aufweist, dessen Leisten für eine Luft- oder Sauerstoffzufuhr zumindest teilweise hohl und mit Luftaustrittsöffnungen versehen sind.

2. Kompostieranlage nach Anspruch 1, dadurch gekennzeichnet, daß der Kratzboden (3) hohle Kratzleisten (24) aufweist, die mit Austrittsöffnungen (29) versehen und mit einer Zufuhrleitung (28) verbunden sind.

3. Kompostieranlage nach Anspruch 1, dadurch gekennzeichnet, daß der untere Sammler (8) einen geschlossenen Förderkanal aufweist, in dem eine wellenlose Förderschnecke (9) vorgesehen ist.

4. Kompostieranlage nach Anspruch 3, dadurch gekennzeichnet, daß der untere Sammler (8) eine Aufgabeöffnung aufweist, der ein Abfallzerkleinerer (21) zugeordnet ist.

5. Kompostieranlage nach Anspruch 4, dadurch gekennzeichnet, daß die Aufgabeöffnung vor der Mündung der Austragseinrichtungen (2) vorgesehen ist.

6. Kompostieranlage nach Anspruch 1, dadurch gekennzeichnet, daß der Steigförderer (12) einen geschlossenen Förderkanal aufweist, in dem eine wellenlose Förderschnecke (13) vorgesehen ist.

7. Kompostieranlage nach Anspruch 1, dadurch gekennzeichnet, daß der obere Verteiler (15) einen geschlossenen Förderkanal aufweist, in dem eine wellenlose Förderschnecke (16) vorgesehen ist.

8. Kompostieranlage nach Anspruch 7, dadurch gekennzeichnet, daß der obere Verteiler (15) nach dem letzten Abgabefenster (17) einen Entladeabschnitt (19) aufweist, der einen Endverschluß (20) aufweist.

## Claims

1. A composting installation for composting waste in accordance with predetermined decomposition parameters comprising at least two containers (1) which each form a respective decomposition unit and which each have a lower discharge device (2) and an upper filling opening (6), and a conveyor arrangement (7) which has a lower collector (8) associated with all discharge devices (2), an elevator conveyor (12) disposed at the end of the collector (8) and an upper distributor (15) in which there is provided for each container (1) a closable delivery window (17) associated with the filling opening (6), wherein each lower discharge device (2) has a scraper bottom (3) which is reciprocable by means of a hydraulic drive (4) and whose bars are at least partially hollow for a feed of air or oxygen and are provided with air outlet openings.

2. A composting installation according to claim 1 characterised in that the scraper bottom (3) has hollow scraper bars (24) which are provided with outlet openings (29) and which are connected to a feed conduit (28).

3. A composting installation according to claim 1 characterised in that the lower collector (8) has a closed conveyor passage in which a shaft-less conveyor screw (9) is provided.

4. A composting installation according to claim 3 characterised in that the lower collector (8) has a feed opening with which a waste crusher (21) is associated.

5. A composting installation according to claim 4 characterised in that the feed opening is disposed upstream of the mouth of the discharge devices (2).

6. A composting installation according to claim 1 characterised in that the elevator conveyor (12) has a closed conveyor passage in which a shaft-less conveyor screw (13) is disposed.

7. A composting installation according to claim 1 characterised in that the upper distributor (15) has a closed conveyor passage in which a shaft-less conveyor screw (16) is disposed.

8. A composting installation according to claim 7 characterised in that downstream of the last delivery window (17) the upper distributor (15) has an unloading portion (19) having an end closure means (20).

## Revendications

1. Installation pour le compostage de déchets suivant des paramètres de pourrissement prédéfinis, formée d'au moins deux récipients (1) qui forment chacun une unité de pourrissement et qui comportent chacun un dispositif d'évacuation inférieur (2) et une ouverture de charge supérieure (6), et d'un dispositif convoyeur (7) qui comprend un collecteur inférieur (8) associé à tous les dispositifs d'évacuation (2), un convoyeur ascendant (12) disposé à l'extrémité du collecteur (8) et un répartiteur supérieur (15) dans lequel on prévoit pour chaque récipient (1) une fenêtre de distribution (17) apte à être fermée et associée à l'ouverture de charge (6), étant précisé que chaque dispositif d'évacuation inférieur (2) comporte un fond racleur (3) qui est mobile suivant un mouvement de va-et-vient grâce à un entraînement hydraulique (4) et dont les barres sont au moins partiellement creuses et pourvues d'ouvertures de sortie d'air pour une amenée d'air ou d'oxygène.

2. Installation de compostage selon la revendication 1, caractérisée en ce que le fond racleur (3) comporte des barres racleuses creuses (24) qui sont pourvues d'ouvertures de sortie (29) et qui sont reliées à une conduite d'amenée (28).

3. Installation de compostage selon la revendication 1, caractérisée en ce que le collecteur inférieur (8) comporte un conduit de transport fermé dans lequel est prévue une vis sans fin sans arbre (9).

4. Installation de compostage selon la revendication 3, caractérisée en ce que le collecteur inférieur (8) comporte une ouverture d'alimentation à laquelle est associé un broyeur de déchets (21).

5. Installation de compostage selon la revendication 4, caractérisée en ce que l'ouverture d'alimentation est prévue avant le débouché des dispositifs d'évacuation (2).

6. Installation de compostage selon la revendication 1, caractérisée en ce que le convoyeur ascendant (12) comporte un conduit de transport fermé dans lequel est prévue une vis sans fin sans arbre (13).

7. Installation de compostage selon la revendication 1, caractérisée en ce que le répartiteur supérieur (15) comporte un conduit de transport fermé dans lequel est prévue une vis sans fin sans arbre (16).

8. Installation de compostage selon la revendication 7, caractérisée en ce que le répartiteur supérieur (15) comporte, après la dernière fenêtre de distribution (17), une section de décharge (19) pourvue d'un obturateur d'extrémité (20).
